# EUROPÄISCHE PATENTSCHRIFT

(11) **EP 4 078 099 B1**
(45) Veröffentlichungstag und Bekanntmachung des Hinweises auf die Patenterteilung: **11.09.2024**
(21) Anmeldenummer: 20817283.3
(22) Anmeldetag: 01.12.2020
(51) Int. Cl.: G01F 1/58, G01F 15/14, G01F 15/18

(54) **MAGNETISCH-INDUKTIVES DURCHFLUSSMESSGERÄT**
MAGNETIC-INDUCTIVE FLOW METER
DÉBITMÈTRE À INDUCTION MAGNÉTIQUE

(30) Priorität: 18.12.2019 DE 102019135011
(43) Veröffentlichungstag der Anmeldung: 26.10.2022
(73) Patentinhaber: Endress + Hauser Flowtec AG, 4153 Reinach (CH)
(72) Erfinder: VOIGT, Frank, 79576 Weil am Rhein (DE); ZIEGLER, Steffen, 79650 Schopfheim (DE)
(74) Vertreter: Penner, Paul
(86) Internationale Anmeldenummer: PCT/EP2020/084078
(87) Internationale Veröffentlichungsnummer: WO 2021/121957

(56) Entgegenhaltungen:
- EP-A2- 0 852 704
- DE-A1- 102016 118 064
- US-A- 4 679 442
- US-A- 4 881 413
- US-A- 5 583 299
- US-A1- 2010 313 675

## Beschreibung

Die Erfindung betrifft ein magnetisch-induktives Durchflussmessgerät.

Magnetisch-induktive Durchflussmessgeräte werden zur Bestimmung der Durchflussgeschwindigkeit und des Volumendurchflusses eines fließenden Mediums in einer Prozessleitung eingesetzt. Ein magnetisch-induktives Durchflussmessgerät weist ein Magnetsystem auf, das ein Magnetfeld senkrecht zur Flussrichtung des fließenden Mediums erzeugt. Dafür werden üblicherweise einzelne Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung U die Durchflussgeschwindigkeit u und, mit Hinzunahme eines bekannten Rohrquerschnitts, der Volumendurchfluss *V̇* ermittelt werden. Ein Beispiel für ein magnetisch-induktives Durchflussmessgerät wird in der US 4 679 442 A offenbart.

Die EP 0 852 704 A2 und die US 2010/313675 A1 beispielsweise offenbaren jeweils ein herkömmliches magnetisch-induktives Durchflussmessgerät bei dem die Polschuhe in dafür vorgesehene Aufnahmen des Messrohrkörpers angeordnet sind.

Bisher gibt es nur wenige Durchflussmessgeräte, die sich das Faraday'sche Gesetz der magnetischen Induktion zu Nutze machen und gleichzeitig für sogenannte Einweg-Anwendungen geeignet sind. Einweg-Anwendungen setzen voraus, dass die mediumsberührenden Teile ausgewechselt werden können. Bei magnetisch-induktive Durchflussmessgeräte wären es demnach die Messelektroden und Teile des Messrohres, wie z.B. der Liner oder der gesamte Messrohrkörper.

Die DE 10 2016 118 064 A1 lehrt ein magnetisch-induktives Durchflussmessgerät, welches eine U-förmige Messrohraufnahme für austauschbare Messrohre aufweist. Dabei befindet sich das Magnetsystem im Messgerätegehäuse und die Gegenkontakte für die im Messrohr angebrachten Messelektroden in der Messrohraufnahme.

Die US 5 583 299 A offenbart ebenfalls eine Lösung für Einweganwendungen für magnetisch-induktive Durchflussmessgeräte, bei dem die Aufnahmeeinheit als Klammer ausgebildet ist, in welche das auswechselbare Messrohr einklemmbar ist und in dem die magnetfelderzeugende Vorrichtung angeordnet ist. Für eine verbessertes Einführen des Magnetfeldes in das Medium, weist das auswechselbare Messrohr magnetische Polschuhe auf, die bei Anordnung des Messrohres in der Aufnahmeeinheit in Kontakt mit dem Spulenkern der magnetfelderzeugenden Vorrichtung stehen.

Die US 4 881 413 A offenbart ein Blutfluss-Überwachungssystem bestehend aus einem magnetisch-induktiven Durchflussmessgerät mit einem auswechselbaren Messrohr. Am auswechselbaren Messrohr sind nicht nur die Messelektroden und dazugehörgie Anschlusskontakte angeordnet, sondern auch die Polschuhe zum Erzeugen eines homogenen Magnetfeldes im Messrohr.Nachteilig an den bereits bekannten magnetisch-induktiven Durchflussmessgerät für Einweg-Anwendungen ist, dass eine Homogenität des Magnetfeldes im Messabschnitt des Messrohres nur durch einen erhöhten Energieaufwand realisierbar ist.

Der Erfindung liegt die Aufgabe zugrunde ein magnetisch-induktives Durchflussmessgerät für Einweg-Anwendungen bereitzustellen, welches weniger Energie für ein im Wesentlichen homogenes Magnetfeld im Messabschnitt des Messrohres benötigt.

Die Aufgabe wird gelöst durch das magnetisch-induktive Durchflussmessgerät nach Anspruch 1.

Das erfindungsgemäße magnetisch-induktive Durchflussmessgerät, umfasst:
- ein Messrohr zum Führen eines fließfähigen Mediums in eine Längsrichtung umfassend:
   -- einen insbesondere elektrisch isolierend ausgebildeter Messrohrkörper,
      wobei der Messrohrkörper eine integral ausgebildete Aufnahme aufweist,
      wobei der Messrohrkörper eine Montagefläche aufweist, zum mechanisch lösbaren Einbau des Messrohres in eine Aufnahmeeinheit in einer, insbesondere durch die Montagefläche definierten Position;
   -- mindestens zwei insbesondere im Messrohrkörper diametral angeordnete Messelektroden zum Bilden eines galvanischen Kontaktes mit dem Medium,
      wobei eine Längsebene (41), in welcher eine Längsachse (7) des Messrohres (1) verläuft und welche senkrecht zu einer zwei Messelektroden (3.1, 3.2) verbindenden Elektrodenachse (21) verläuft den Messrohrkörper (2) in zwei Seiten (I, II) einteilt; und
   -- mindestens einen Polschuh, der aus einem einzelnen Blechteil oder aus einer Vielzahl an insbesondere in Längsrichtung des Polschuhs gestapelten und miteinander verbundenen Blechteilen gebildet ist,
      wobei der Polschuh in der Aufnahme angeordnet ist,
- die Aufnahmeeinheit zum Aufnehmen des auswechselbaren Messrohres, umfassend:
   -- ein Gehäuse,
      wobei das Gehäuse eine Messrohraufnahme aufweist;
   -- eine magnetfelderzeugende Vorrichtung zum Erzeugen eines durch die Messrohraufnahme reichenden Magnetfeldes,
      wobei die magnetfelderzeugende Vorrichtung zwei Spulen mit jeweils einem sich durch das Innere einer Spule erstreckenden Spulenkern aufweist,
      wobei die magnetfelderzeugende Vorrichtung im Gehäuse angeordnet ist;
   -- Messschaltung zum Bestimmen einer an Messelektroden des Messrohres anliegenden Messspannung;
   -- Betriebsschaltung zum Betreiben der magnetfelderzeugenden Vorrichtung;
   -- mindestens zwei Anschlusskontakte, die dazu ausgebildet sind die Messelektroden des Messrohres mit der Messschaltung elektrisch und mechanisch lösbar zu verbinden,
      wobei Kontaktbereiche der jeweiligen Anschlusskontakte aus dem Gehäuse hervorstehen und in die Messrohraufnahme reichen,
      wobei das Messrohr mechanisch lösbar mit der Aufnahmeeinheit verbunden ist,
      **dadurch gekennzeichnet, dass** das Messrohr genau einen Feldführungskörper zum Führen eines magnetischen Feldes umfasst, welcher an einer der zwei Seiten des Messrohrkörpers angeordnet ist,
      wobei der Feldführungskörper formschlüssig mit dem Messrohrkörper verbunden ist,
      wobei der Feldführungskörper zwei offene Kontaktflächen aufweist,
      wobei die magnetfelderzeugende Vorrichtung zwei Kontaktflächen aufweist, welche jeweils als eine Kontaktfläche für den am Messrohr angeordneten Feldführungskörper dienen,
      wobei die Kontaktflächen an einer Stirnseite des Gehäuses angeordnet sind,
      wobei der Feldführungskörper dazu eingerichtet ist, nach dem Anordnen des Messrohres in die Aufnahmeeinheit die zwei Spulenkerne der magnetfelderzeugenden Vorrichtung miteinander zu verbinden.

In der Regel sind bei magnetisch-induktiven Durchflussmessgeräten Polschuhe mit aufgesetzten Spulen verbaut, wobei die Polschuhe auf einer Mantelfläche des Messrohres angebracht sind. Sie umgreifen das Messrohr und spannen einen Bereich auf, in dem das Magnetfeld im Medium annähernd homogen bzw. senkrecht zur Abszissenachse verläuft. Magnetisch-induktive Durchflussmessgeräte für Einweg-Anwendungen weisen eine Aufnahmeeinheit auf, in der die Messschaltung, die Betriebsschaltung und die magnetfelderzeugende Vorrichtung angeordnet ist. Wenn ein Polschuh vorgesehen ist, dann ist dieser im Gehäuse der Aufnahmeeinheit angeordnet. Die auswechselbaren Messrohre weisen in der Regel keine Komponenten der magnetfelderzeugende Vorrichtung auf. Erfindungsgemäß weist der Messrohrkörper des Messrohres eine Aufnahme auf, in der ein Polschuh angeordnet ist. In dem Fall wird mit jedem auszuwechselnden Messrohr auch der Polschuh ausgewechselt. Dadurch wird der Abstand zwischen dem Kanal des Messrohres, welcher mit dem Medium beaufschlagbar ist, und der magnetfelderzeugende Vorrichtung reduziert und das durch den Kanal des Messrohres verlaufende Magnetfeld homogener.

Der Vorteil des erfindungsgemäßen Gegenstandes liegt darin, dass ein geschlossenen Magnetsystem realisiert werden kann, ohne Nachteile bei der Montagefreundlichkeit des Messrohres in die Messrohraufnahme zu bekommen. Die magnetfelderzeugende Vorrichtung ist modular ausgebildet. Das heißt ein Teil der magnetfelderzeugende Vorrichtung ist am Messrohr angeordnet. In dem Fall sind es der Polschuh, bzw. die Polschuhe und ein Feldführungskörper. Im Montagzustand ist das Magnetsystem teilweise offen. Erst wenn das Messrohr in die Messrohraufnahme eingesetzt ist, und der Feldführungskörper des Messrohres in Kontakt mit der magnetfelderzeugenden Vorrichtung ist, wird das Magnetsystem geschlossen.

Eine erfindungsgemäße Lösung hat den Vorteil, dass eine Feldführung um beide Seiten des Messabschnittes entlang der Messelektroden realisiert werden kann. Das teilweise offene Magnetsystem wird erfindungsgemäß über einen im Messrohr angeordneten Feldführungskörper geschlossen.

Vorteilhaft ist, wenn der Messrohrkörper zwei gegenüberliegend angeordnete Aufnahmen mit jeweils einen in der Aufnahme angeordneten Polschuh aufweisen.
Eine Ausgestaltung sieht vor, der Polschuh eine erste Stirnfläche und zweite Stirnfläche aufweist, die den Polschuh in Längsrichtung abgrenzen,
wobei sich der Messrohrkörper entlang der ersten Stirnfläche und zweiten Stirnfläche erstreckt und diese jeweils in Längsrichtung insbesondere vollständig bedeckt.

Vorteilhaft an der Ausgestaltung ist, dass der Polschuh durch die Bedeckung gegen Bewegungen in Längsrichtung des Messrohres fixiert wird.

Eine Ausgestaltung sieht vor, dass der Polschuh eine erste Seitenflächen und eine zweite Seitenflächen aufweist,
wobei die erste Seitenfläche die erste Stirnfläche mit der zweiten Stirnfläche verbindet,
wobei die zweite Seitenfläche die erste Stirnfläche mit der zweiten Stirnfläche verbindet,
wobei sich der Messrohrkörper entlang der ersten Seitenfläche und der zweiten Seitenfläche erstreckt und diese insbesondere vollständig bedeckt.

Vorteilhaft an der Ausgestaltung ist, dass der Polschuh zusätzlich auch gegen Bewegungen in Querrichtung des Messrohres fixiert ist. Es ist vorteilhaft, wenn die Aufnahme derart ausgebildet ist, dass der Polschuh formschlüssig mit dem Messrohrkörper verbunden ist.

Eine Ausgestaltung sieht vor, dass eine Grundfläche des Polschuhs nicht oder nur teilweise durch den Messrohrkörper bedeckt ist,
wobei die Grundfläche die erste Stirnfläche und die zweite Stirnfläche verbindet,
wobei die Grundfläche die erste Seitenfläche mit der zweiten Seitenfläche verbindet.

Die offene Grundfläche dient dazu um mit einem Spulenkern in Kontakt gebracht zu werden, welcher Teil einer in der Aufnahmeeinheit angeordneten magnetfelderzeugenden Vorrichtung ist. Dabei ist darauf zu achten, dass zwischen der Grundfläche und dem Spulenkern keine Einschlüsse entstehen. Daher ist die Grundfläche komplementär zum Endabschnitt des Spulenkerns ausgebildet. Gemäß einer vorteilhaften Ausgestaltung ist die Grundfläche planar ausgebildet. Der Polschuh dient dazu das durch die Spule erzeugte und den Spulenkern geführte Magnetfeld bis zu dem Kanal zu führen und dieses dort über den Messabschnitt aufzuspannen, in dem auch die Messelektroden angeordnet sind.

Eine Ausgestaltung sieht vor, dass der Messrohrkörper monolithisch ausgebildet ist,
wobei der Messrohrkörper mittels eines Urformverfahrens, insbesondere mittels eines Spritzgussverfahrens gebildet ist,
wobei der Polschuh mittels des Urformverfahrens, insbesondere mittels des Spritzgussverfahrens teilweise durch ein den Messrohrkörper bildenden Vergussmaterial umspritzt ist.

Vorteilhaft an der Ausgestaltung ist die einfache und kostengünstige Herstellung eines Messrohrkörpers mit integrierten Messelektroden und einem integrierten Polschuh. Somit müssen die Polschuhe nicht nachträglich in die Führung eingesetzt werden.

Eine Ausgestaltung sieht vor, dass sich der Spulenkern durch eine Öffnung in der Messrohraufnahme erstreckt,
wobei der Spulenkern derart ausgebildet und in der Messrohranordnung angeordnet ist, dass bei einem Anordnen des Messrohres in die Messrohraufnahme ein Kontakt zwischen Spulenkern und Polschuh entsteht.

Vorteilhaft an der Ausgestaltung ist, dass zwischen dem Spulenkern und dem Polschuh keine isolierende Trennung existiert, welche das durch den Kanal des Messrohres verlaufende Magnetfeld verringern würde.

Eine Ausgestaltung sieht vor, dass die Messrohranordnung durch zwei Schenkelflächen senkrecht zu einer Montagerichtung und zur Längsrichtung des Messrohrkörpers begrenzt ist,
wobei die Messrohranordnung durch eine Basisfläche in Montagerichtung begrenzt ist.

Eine Ausgestaltung sieht vor, dass eine Spule in Montagerichtung hinter der Basisfläche angeordnet ist,
wobei der Spulenkern einen ersten Spulenkernabschnitt aufweist, welcher sich durch die Spule erstreckt,
wobei der Spulenkern einen zweiten Spulenkernabschnitt aufweist, welcher sich ausgehend von dem ersten Spulenkernabschnitt in Richtung einer der zwei Schenkelflächen erstreckt.

Eine derartige Ausgestaltung weist eine vereinfachte Bauweise auf und lässt sich einfach in die Aufnahmeeinheit montieren. Der Spulenkern ist vorzugsweise durch ein Blechteil oder durch eine Vielzahl an gestapelten Blechteilen gebildet.

Somit wird das teilweise offene Magnetsystem der magnetfelderzeugenden Vorrichtung in der Aufnahmeeinheit durch Einführen des Messrohres und durch das Kontaktieren mit dem im Messrohr angeordneten Feldführungskörper geschlossen.

Die Erfindung wird anhand der nachfolgenden Figuren näher erläutert. Es zeigt:
Fig. 1: eine perspektivische Ansicht einer Ausgestaltung der Aufnahmeeinheit;
Fig. 2: einen Längsschnitt durch die Ausgestaltung der in Fig. 1 abgebildeten Aufnahmeeinheit;
Fig. 3: eine Nahansichten aus dem Längsschnitt der Fig. 2 auf die Anschlusskontakte;
Fig. 4: eine Nahansichten aus einem Querschnitt der Aufnahmeeinheit aus Fig. 1, insbesondere der Messrohraufnahme mit eingesetztem Messrohr und eine Nahansichten aus einem Querschnitt der Aufnahmeeinheit, insbesondere der Messrohraufnahme ohne eingesetztem Messrohr;
Fig. 5: einen Längsschnitt durch die Ausgestaltung der in Fig. 1 abgebildeten Aufnahmeeinheit, insbesondere durch die Fixiervorrichtung und eine Nahansicht der Messrohraufnahme;
Fig. 6: einen Querschnitt durch die in der Fig. 1 abgebildeten Ausgestaltung der Aufnahmeeinheit, insbesondere durch die Fixiervorrichtung;
Fig. 7: eine perspektivische Ansicht auf eine weitere Ausgestaltung der Aufnahmeeinheit mit eingesetztem Messrohr;
Fig. 8: einen Längsschnitt durch die Ausgestaltung der in Fig. 7 abgebildeten Aufnahmeeinheit, eine Nahansicht der Messrohraufnahme und eine Nahansicht eines Querschnittes der Messrohraufnahme mit eingesetztem Messrohr;
Fig. 9: einen Querschnitt durch die in Fig. 7 abgebildeten Ausgestaltung der Aufnahmeeinheit mit eingesetztem Messrohr;
Fig. 10: eine perspektivische Ansicht auf eine Ausgestaltung des Messrohres; und
Fig. 11: einen Querschnitt durch eine weitere Ausgestaltung der Aufnahmeeinheit und des Messrohres.

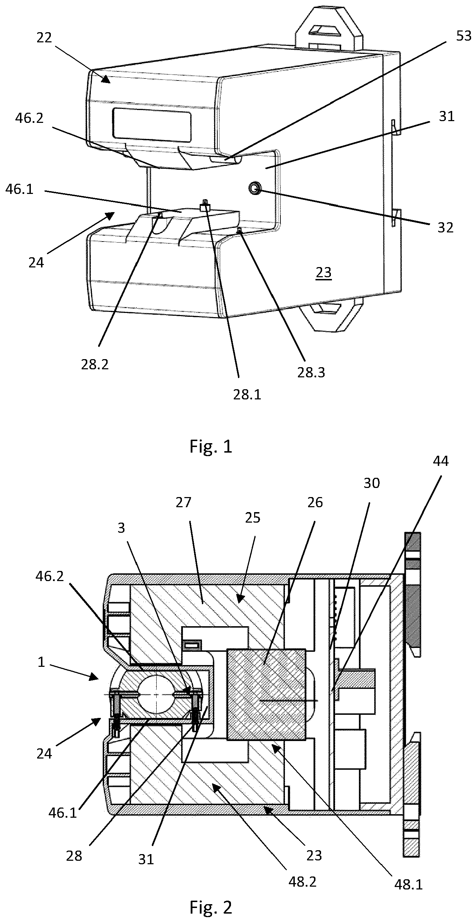

Die Fig. 1 zeigt eine perspektivische Ansicht einer Ausgestaltung der Aufnahmeeinheit 22. Die Aufnahmeeinheit 22 umfasst ein Gehäuse 23, welches eine Messrohraufnahme 24 aufweist. Die Messrohraufnahme 24 dient dazu ein Messrohr aufzunehmen und zu führen. Dabei muss bei der vorliegenden Aufnahmeeinheit 22 das Messrohr geradlinig in Montagerichtung eingeführt werden. Die Messrohraufnahme 24 wird durch eine Basisfläche 31 in Montagerichtung begrenzt. Die Basisfläche 31 ist Teil der Gehäusewandung. Zudem wird die Messrohraufnahme 24 in eine Richtung senkrecht zur Montagerichtung und senkrecht zur Längsrichtung des Messrohres 1 durch zwei Schenkelflächen 46.1, 46.2 begrenzt. Die Schenkelfläche 46.1, 46.2 können sich dabei über mehrere Ebenen erstrecken. In der Schenkelfläche 46.2 sind zwei Öffnungen eingebracht durch die sich jeweils ein Fixierkörper 53 erstreckt. Der Fixierkörper 53 ist Teil einer Fixiervorrichtung und federnd ausgebildet. Das heißt, dass beim Einführen des Messrohres in die Messrohraufnahme 24, eine Kraft senkrecht zur Montagerichtung den Fixierkörper in Richtung des Gehäuseinneren verdrängt. Ist das Messrohr in Einbauposition drückt die Feder den Fixierkörper in eine im Messrohrkörper vorgesehene Aufnahme.

In der Schenkelfläche 46.1 sind Anschlusskontakte 28.1, 28.2, 28.3 angeordnet, welche Kontaktbereiche 29 aufweisen, die in die Messrohraufnahme 24 hineinragen. Die Anschlusskontakte 28.1, 28.2, 28.3 sind federnd ausgebildet und mit einer Messschaltung verbunden. Beim Einführen des Messrohres werden die Anschlusskontakte 28.1, 28.2, 28.3 in Richtung Gehäuseinneres verdrängt. Die federnde Ausgestaltung sorgt dafür, dass im finalen Einbauzustand des Messrohres die Anschlusskontakte 28.1, 28.2, 28.3 in Richtung der Ausgangslage bewegt werden und somit einen mechanischen Kontakt mit der jeweils zugeordneten Messelektrode oder Referenzelektrode des Messrohres bilden. Dabei ist die Verbindung zwischen den Anschlusskontakte 28.1, 28.2, 28.3 und den jeweiligen Messelektroden oder der Referenzelektrode form- und/oder kraftschlüssig.

In der Basisfläche 31 ist ein Steckverbinder 32 angeordnet, welcher dazu dient einem im Messrohr angeordneten Temperatursensor mit der insbesondere im Gehäuse angeordneten Messchaltung zu verbinden. Der Steckverbinder 32 ist dabei komplementär zum Kontaktanschluss des Temperatursensors ausgestaltet. In einer vorteilhaften Ausgestaltung ist der Kontaktanschluss des Temperatursensors als Klinkenstecker und der Steckverbinder 32 als Klinkenbuchse ausgebildet.

Die Fig. 2 zeigt einen Längsschnitt durch eine Ausgestaltung der Aufnahmeeinheit 22. Im Gehäuse 23 der Aufnahmeeinheit 22 ist die Messschaltung 30 und Betriebsschaltung 44 angeordnet. Die Messschaltung 30 ist dazu eingerichtet ein Messspannung an den Messelektroden des Messrohres zu messen. Dafür ist sie mit Anschlusskontakten 28 verbunden, welche beim Einführen des Messrohres 1 einen elektrischen Kontakt mit den Messelektroden 3 bilden. Die Betriebsschaltung 44 ist dazu eingerichtet ein Spulensignal an die Spule 26 anzulegen. Zudem ist die magnetfelderzeugende Vorrichtung 25 im Inneren des Gehäuse 23 angeordnet. Die magnetfelderzeugende Vorrichtung 25 umfasst einen Spulenkern 27 und eine Spule 26, wobei sich der Spulenkern 27 durch einen Spulenquerschnitt erstreckt. Die Spule 26 in Montagerichtung hinter der Basisfläche 31 angeordnet. Der Spulenkern 27 weist einen ersten Teilabschnitt welcher sich durch die Spule 26 erstreckt und zwei Teilabschnitt, welche ausgehend von dem ersten Teilabschnitt in Richtung der Schenkelflächen 46.1, 46.2 erstrecken. Im Längsschnitt des Spulenkerns nimmt der Spulenkern 27 die Form eines C's an, bzw. eines Hufeisens. Die magnetfelderzeugende Vorrichtung 25 weist die Form einer im Spaltpolmotor üblicherweise verwendeten magnetfelderzeugenden Vorrichtung 25. Der Spulenkern 27 ist vorzugsweise einteilig ausgebildet. Der Spulenkern 27 kann aus einem massiven magnetisch leitfähigen Werkstoff, aus einem einzelnen Blechteil oder aus einer Vielzahl an insbesondere in Querrichtung des Spulenkerns gestapelten und miteinander verbundenen Blechteilen gebildet sein. Der Spulenkern 27 weist einen ersten Spulenkernabschnitt 48.1 , welcher sich durch die Spule 26 erstreckt, und einen zweiten Spulenkernabschnitt 48.2 welcher sich ausgehend von dem ersten Spulenkernabschnitt 48.1 in Richtung einer der zwei, insbesondere parallelen Schenkelfläche 46.1, 46.2 erstreckt.

In der Messrohraufnahme 24 ist ein Messrohr 1 mechanisch lösbar und insbesondere form- und/oder kraftschlüssig angeordnet. In der abgebildeten Ausgestaltung ist der Spulenkern 27 zumindest durch die Wandung des Gehäuses 23 von dem Messrohr 1 getrennt.

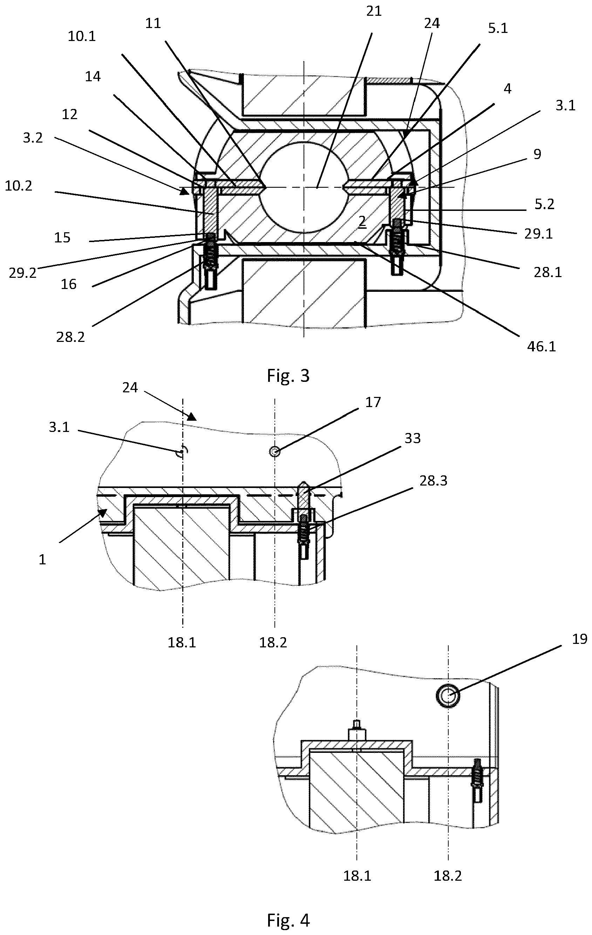

Die Fig. 3 zeigt eine Nahansichten aus dem Längsschnitt der Fig. 2. Die Anschlusskontakte 28.1, 28.2 sind in der Schenkelfläche 46.1 angeordnet und stehen über die Kontaktbereiche 29.1, 29.2 in Kontakt mit den Messelektroden 3.1, 3.2. Die Messelektroden 3.1, 3.2 weisen jeweils einen Messelektrodenkörper 9 auf, welcher einen ersten Messelektrodenteil 10.1, welcher in einem ersten Bereich 5.1 der Aufnahme angeordnet ist und einen zweiten Messelektrodenteil 10.2 aufweist, welcher in einem zweiten Bereich 5.2 angeordnet ist, wobei sich die Richtung der Längsachsen 6.1, 6.2 der beiden Messelektrodenteile 10.1, 10.2 unterscheiden. In der abgebildeten Ausgestaltung sind die Messelektroden 3.1, 3.2 jeweils zweiteilig ausgebildet und in einer Aufnahme im Messelektrodenkörper angeordnet. Zumindest der erste Messelektrodenteil 10.1 der Messelektroden 3.1, 3.2 wurde in einem Spritzgussverfahren zumindest teilweise umspritzt. Der zweite Messelektrodenteil 10.2 wurde nach dem Spritzgussverfahren in den vorgesehenen zweiten Bereich 5.2 der Aufnahme eingesetzt. Der Frontbereich 11 eines ersten Messelektrodenteils 10.1 erstreckt sich in den zum Führen des Mediums geeigneten Kanal des Messrohrkörpers 2. Der erste Messelektrodenteil 10.1 weist zudem im Endbereich 12 eine Aufnahme 13 auf, welche komplementär zu einem Frontbereich 14 des zweiten Messelektrodenteils 10.2 ausgebildet ist. Der Frontbereich 14 des zweiten Messelektrodenteils 10 ist in der Aufnahme 13 des ersten Messelektrodenteils 10.1 angeordnet. Der zweite Messelektrodenteil 10.2 weist einen Endbereich 15 mit einer Aufnahme 16 auf, welche dazu dient einen Teilabschnitt eines Anschlusskontaktes 28 aufzunehmen. Die Längsachse des ersten Messelektrodenteils 10.1 entspricht der Elektrodenachse 21. Die Längsachse des zweiten Messelektrodenteils 10.2 ist zur Längsachse des ersten Messelektrodenteils 10.1 geneigt ausgerichtet. In der abgebildeten Ausgestaltung bilden die Längsachse des ersten Messelektrodenteils 10.1 und die Längsachse des zweiten Messelektrodenteils 10.2 einen Winkel von ca. 90°. Der erste Messelektrodenteil 10.1 und der zweite Messelektrodenteil 10.2 weisen jeweils eine zylindrische Grundform auf. Auch die Aufnahme 14 des ersten Messelektrodenteils 10.1 weist eine zylindrische Grundform auf. Die Aufnahme 16 des zweiten Messelektrodenteils 10.2 ist als konvexe Vertiefung ausgebildet und ermöglicht somit ein erleichtertes Einführung des Anschlusskontaktes 28.1, 28.2. Der zweite Messelektrodenteil 10.2 der ersten Messelektrode 3.1 ist kürzer als der zweite Messelektrodenteil 10.2 der zweiten Messelektrode 3.2. Die hängt mit der Anordnung der Anschlusskontakte 28.1, 28.2 im Gehäuse 23 zusammen. Der Anschlusskontakte 28.2 ist im Eingang der Messrohraufnahme 24 angeordnet, während sich der Anschlusskontakte 28.1 näher zur Basisfläche der Messrohraufnahme 24 befindet. Der Kontaktbereich 29.1 des ersten Anschlusskontaktes 28.1, welcher in Montagerichtung nach dem zweiten Anschlusskontakt 28.2 angeordnet ist, ist in einer Richtung senkrecht zur Montagerichtung und senkrecht zur Längsrichtung des Messrohrkörpers bzw. in Richtung senkrecht zur durch die Elektrodenachse 21 verlaufende Längsebene des Messrohrkörpers 2 versetzt angeordnet. Das heißt, dass der Kontaktbereich 29.1 weiter in die Messrohraufnahme 24 hineinragt, als der Kontaktbereich 29.2 des zweiten Anschlusskontaktes 28.2. Dies ermöglicht ein einfaches und sicheres Einführen des Messrohres 1 in die Messrohraufnahme 24. Die Anschlusskontakte 28 sind federnd ausgebildet. Beim Einführen des Messrohres 1 verdrängt ein Abschnitt des Messrohrkörpers 2 den jeweiligen Kontaktbereich 29 des Anschlusskontaktes 28 in Richtung des Gehäuseinneren. Dabei wird die Feder zusammengestaucht. Ist das Messrohr 1 im Einbauzustand, so treibt die Feder den Kontaktbereich in die ursprüngliche Stellung, wobei dieser in die Aufnahme 16 des zweiten Messelektrodenteils 10.2 geführt wird und mit diesem eine formschlüssige oder zumindest einen mechanischen und elektrischen Kontakt bildet. Die Kontaktbereiche 29 der Anschlusskontakte 28 sind pinförmig ausgebildet und abgerundet.

Der Messelektrodenkörper 9 der Messelektroden 3.1, 3.2 ist aus einem Werkstoff gebildet, welcher Metall umfasst. Im mediumsberührenden Frontbereich der Messelektroden 3.1, 3.2 nimmt die jeweilige Messelektrode 3.1, 3.2 die Form einer Spitzelektrode an.

Die Fig. 4 zeigt eine Nahansichten aus einem Querschnitt der Aufnahmeeinheit, insbesondere der Messrohraufnahme 24 mit eingesetztem Messrohr 1 und eine Nahansichten aus einem Querschnitt der Aufnahmeeinheit, insbesondere der Messrohraufnahme 24 ohne eingesetztem Messrohr 1. Das abgebildete Messrohr 1 umfasst eine Messelektrode 3.1, welche zumindest teilweise in den zum Führen des Mediums geeigneten Kanal hineinragt. In Längsrichtung des Messrohres 1 versetzt ist ein Temperatursensor 17 angeordnet. Der Temperatursensor 17 ist dazu geeignet eine zur Mediumstemperatur proportionale Messgröße zu bestimmen. Eine im Gehäuse angeordnete Messschaltung ist dazu eingerichtet mit dem Temperatursensor 17 zu kommunizieren. Der Kontakt mit dem Temperatursensor 17 erfolgt über einen Steckverbinder 19, welcher in der Basisfläche der Messrohraufnahme 24 angeordnet ist. Durch ein Einführen des Messrohres in eine Montagerichtung wird der komplementär zum Steckverbinder 19 ausgebildete Anschlusskörper des Temperatursensors 17 auf den Steckverbinder 19 gesteckt bzw. in den Steckverbinder 19 eingeführt. Im unteren Teil des Messrohres 1 - d.h. unterhalb der Längsebene des Messrohres - ist eine Referenzelektrode 33 angeordnet, welche zur Erdung des Mediums dient. Die Referenzelektrode 33 ist als Spitzelektrode ausgebildet und über einen dritten Anschlusskontakte 28.3 mit der Messschaltung verbunden. Im Einbauzustand erstreckt sich der Kontaktbereich 29.3 des dritten Anschlusskontaktes 28.3 in einer Aufnahme der Referenzelektrode 33. Der dritte Anschlusskontakte 28.3 ist ebenfalls federnd ausgebildet. Die erste Messelektrode 3.1 bzw. der erste Anschlusskontakt 28.1 befindet sich in einer ersten Querschnittsebene 18.1, während sich die Referenzelektrode 33 in einer zweiten Querschnittsebene 18.2 befindet, die in Längsrichtung des Messrohres 1 versetzt angeordnet ist.

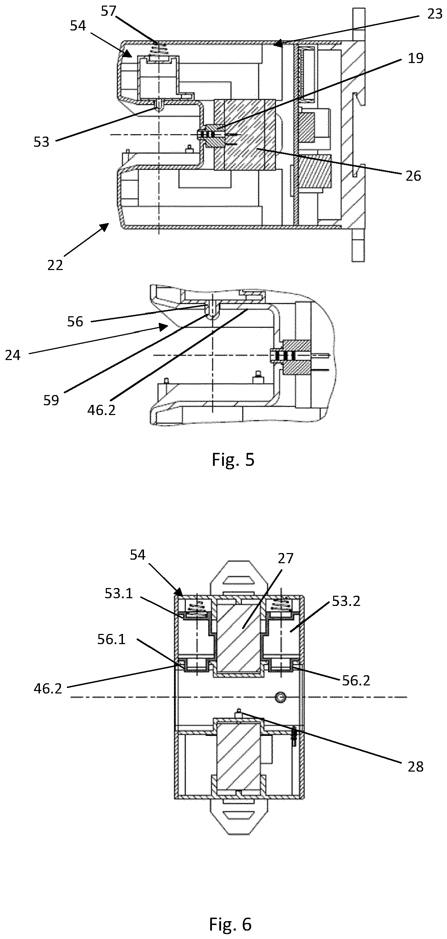

Die Fig. 5 zeigt einen Längsschnitt durch die Ausgestaltung der in Fig. 1 abgebildeten Aufnahmeeinheit 22, insbesondere durch die Fixiervorrichtung 54 und eine Nahansicht der Messrohraufnahme 24. Die abgebildete Fixiervorrichtung 54 umfasst einen Fixierkörper 53 und eine Feder, welche an einer Innenfläche 57 des Gehäuses 23 angeordnet ist. Im ursprünglichen Zustand liegt ein Teilabschnitt des Fixierkörpers 53 auf einer Innenseite der Gehäusewandung auf, insbesondere auf einen Teilabschnitt der Wandung, an welcher sich die Schenkelfläche 46.2 befindet. In der Schenkelfläche 46.2 befindet sich eine Öffnung 56 durch welche sich der Fixierkörper 53 erstreckt. Der Fixierkörper 53 ragt in die Messrohraufnahme 24 hinein. Der Fixierkörper 53 umfasst eine Andrückfläche 59, welche einen Lotvektor aufweist, der aus einer Summe zweier Basisvektoren gebildet ist, nämlich aus einem ersten Basisvektor der ausschließlich entgegengesetzt zur Montagerichtung zeigt und einen zweiten Basisvektor, der in die Messrohraufnahme 24 zeigt und senkrecht zum ersten Basisvektor verläuft.

In der Basisfläche der Messrohraufnahme 24 ist ein Steckverbinder 19 angeordnet, welcher als Hülse, insbesondere als Klinkenhülse ausgebildet ist. Der Steckverbinder weist eine Längsachse auf, welche parallel zu einer Messelektrodenachse des Messrohres verläuft. Der Steckverbinder 19 ist in Längsrichtung des Messrohres (nicht abgebildet) zur Spule 26 versetzt angeordnet.

Die Fig. 6 zeigt einen Querschnitt durch die in der Fig. 1 abgebildeten Ausgestaltung der Aufnahmeeinheit 22, insbesondere durch die Fixiervorrichtung 54. Die abgebildete Fixiervorrichtung 54 umfasst zwei Fixierkörper 53.1 53.2, welche im Gehäuse 23 angeordnet und jeweils federnd ausgebildet sind. Die Fixierkörper 53.1, 53.2 sind in Längsrichtung der Messrohraufnahme 24 versetzt angeordnet. Zwischen den Fixierkörper 53.1, 53.2 erstreckt sich der Spulenkern 27 der magnetfelderzeugende Vorrichtung. Die Fixiervorrichtung 54 ist ausschließlich auf einer Seite der Messrohraufnahme 24 angeordnet. Auf der entgegengesetzten Seite sind die Anschlusskontakte 28 für die Messelektroden und die Referenzelektrode angebracht. In der Schenkelfläche 46.2 befinden sich zwei Öffnung 56.1, 56.2, durch welche sich jeweils einer der Fixierkörper 53.1, 53.2 erstreckt.

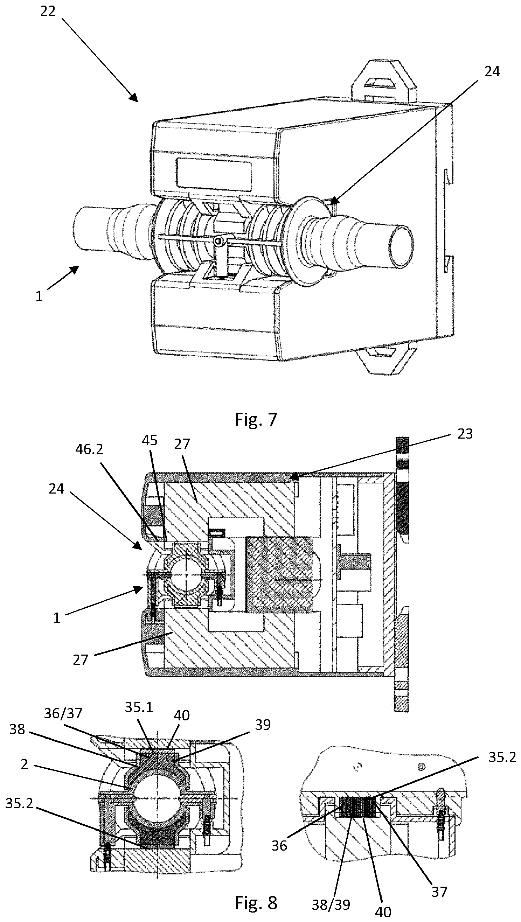

Der Fixierkörper 53 weist eine Andrückfläche 59 auf, die dafür sorgt, dass ein geradliniges Einführen des Messrohres 1 in die Messrohraufnahme 24 bei Kontakt zwischen Andrückfläche 59 des Fixierkörpers 53 und Andrückfläche 55 des Messrohres 1 in eine Bewegung des Fixierkörpers 53 senkrecht zur Montagerichtung in Richtung Gehäuseinneres umgesetzt wird. Die Andrückfläche 59 weist daher einen Lotvektor auf, der aus einer Summe zweier Basisvektoren gebildet ist, nämlich aus einem ersten Basisvektor der ausschließlich entgegengesetzt zur Montagerichtung zeigt und einen zweiten Basisvektor, der in die Messrohraufnahme 24 zeigt und senkrecht zum ersten Basisvektor verläuft
Die Fig. 7 zeigt eine perspektivische Ansicht einer weiteren Ausgestaltung der Aufnahmeeinheit 22 mit eingesetztem Messrohr 1. Die in der Fig. 7 abgebildete Ausgestaltung unterscheidet sich von der zuvor abgebildeten Ausgestaltung (siehe Fig. 1 bis 6) hauptsächlich in der Ausgestaltung des Messrohres 1, der im Gehäuse angeordneten magnetfelderzeugenden Vorrichtung und der Messrohraufnahme 24.

Die Fig. 8 zeigt einen Längsschnitt durch die in der Ausgestaltung der Fig. 7 abgebildeten Aufnahmeeinheit 22, eine Nahansicht der Messrohraufnahme 24 und eine Nahansicht eines Querschnittes der Messrohraufnahme 24, jeweils mit eingesetztem Messrohr 1. Die abgebildete magnetfelderzeugende Vorrichtung 25 entspricht im Wesentlichen der magnetfelderzeugenden Vorrichtung 25 aus der Fig. 2. Der wesentliche Unterschied liegt darin, dass sich zwei Teilabschnitt des Spulenkerns 27 jeweils durch eine Öffnung 45 erstreckt. Der Spulenkern 27 ist einstückig oder mehrteilig aus einem massiven Magnetkern oder aus mindestens einem einzelnen Blechteil oder aus einer Vielzahl an insbesondere in Längsrichtung des Polschuhs gestapelten und miteinander verbundenen Blechteilen gebildet. Gleiches gilt für den Polschuh 35. Der Polschuh 35 ist anders als üblich nicht im Gehäuse 23, sondern am Messrohrkörper 2 angeordnet. Der Polschuh 35 weist eine Grundfläche 40 auf, welche im Einbauzustand in Berührung mit dem Spulenkern 27 steht. Das somit durch die Spule erzeugte Magnetfeld wird durch den Spulenkern zum am Messrohr 1 angeordneten Polschuh 35 geführt, welcher den Kanal des Messrohres zumindest teilweise überspannt, wodurch sich im Inneren des Kanals ein im Wesentlichen homogenes Magnetfeld bildet.

In der abgebildeten Ausgestaltung umfasst das Messrohr 1 zwei diametral angeordnete Polschuhe 35.1, 35.2. Die Polschuhe 35.1, 35.2 sind mittels eines Spritzgussverfahrens teilweise durch die den Messrohrkörper 2 bildenden Vergussmasse umspritzt, aber zumindest soweit, dass die Seitenflächen 38, 39 und die Stirnflächen 36, 37 zumindest teilweise bedeckt sind und die Grundfläche 40 frei bzw. teilweise freigelegt ist, so dass zwischen Grundfläche 40 des Polschuhs 35 und Spulenkern 27 keine nachteilige Zwischenschicht vorhanden ist. Die Grundfläche 40 ist komplementär zum jeweiligen Endabschnitt des Spulenkerns 27 ausgestaltet. In der abgebildeten Ausgestaltung sind die Grundfläche 40 und der dazugehörige Endabschnitt des Spulenkerns 27 als eine ebene Fläche ausgebildet.

Die Ausgestaltung der Anschlusskontakte entspricht der abgebildeten Ausgestaltung aus Fig. 3.

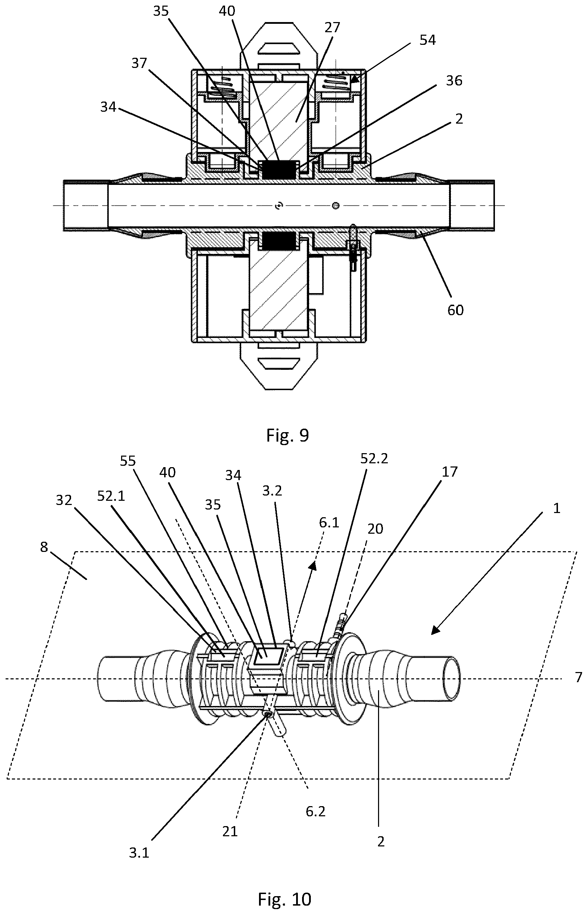

Die Fig. 9 zeigt einen Querschnitt durch die in der Fig. 7 abgebildeten Ausgestaltung der Aufnahmeeinheit 22 mit eingesetztem Messrohr 1, wobei das Messrohr 1 form- und kraftschlüssig in der Messrohraufnahme 24 eingesetzt ist. Anders als in der Fig. 6 abgebildeten Ausgestaltung weist das Messrohr 1 eine Aufnahme 34 auf, in welche genau ein Polschuh 35 eingesetzt ist. Die Aufnahme 34 ist derart ausgebildet, dass der Polschuh 35 formschlüssig mit dem Messrohrkörper 2 verbunden ist. Die Stirnflächen 36, 37 berühren den Messrohrkörper 2 ebenso wie die Seitenflächen 38,39. Ein nachträgliches Entnehmen des Polschuhs 35 aus der Aufnahme 34 ist nicht möglich, da der Polschuh 35 mit dem den Messrohrkörper 2 bildenden Vergussmaterial umspritzt ist, bzw. da der Polschuh 35 im Messrohrkörper 2 integriert ist. Die Grundfläche 40 des Polschuhs 35 berührt den Spulenkern 27, welcher sich durch eine Öffnung in der Stirnfläche der Messrohraufnahme erstreckt. Die Anordnungen und Ausgestaltungen der Anschlusskontakte 28 und der Fixiervorrichtung 54 entsprechen den vorherigen, abgebildeten Ausgestaltungen. Das Messrohr 1 ist über die Prozessanschlüsse 60 mit einem Schlauchsystem verbunden.

Die Fig. 10 zeigt eine perspektivische Ansicht auf eine Ausgestaltung des Messrohres 1. Das Messrohr 1 weist zwei diametral angeordnete Messelektroden 3.1, 3.2 auf, welche jeweils zweiteilig ausgebildet sind. Ein erstes Messelektrodenteil weist eine erste Längsachse 6.1 auf, welche senkrecht zur Längsachse 7 des Messrohres 1 verläuft und der Elektrodenachse 21 entspricht. Der zweite Messelektrodenteil weist eine zweite Längsachse 6.2 auf, welche senkrecht zur ersten Längsachse verläuft. Zudem weist das Messrohr 1 einen Temperatursensor 17 mit einem Steckverbinder auf, welcher komplementär zu einem in der Aufnahmeeinheit, insbesondere in der Messrohraufnahme angeordneten Steckverbinder ausgebildet ist. Der abgebildete Steckverbinder des Temperatursensors 17 ist ein Klinkenstecker. Die Elektrodenachse 21, die Bezugsachse 20 des Temperatursensors 17 und die Längsachse des Messrohrkörpers 7 liegen in einer gemeinsamen Längsebene 8.

Der Messrohrkörper 2 weist zwei diametral angeordnete Aufnahmen 34 für jeweils einen Polschuh 35 auf, wobei eine die Polschuhe 35 verbindende Bezugsgerade die Längsachse 7 des Messrohres 1 senkrecht schneidet. Die Polschuhe 35 sind so in den Messrohrkörper 2 integriert, dass ausschließlich eine Grundfläche 40 freigelegt ist, welche mit dem jeweiligen in der Aufnahmeeinheit angeordneten Spulenkern in Kontakt gebracht wird. Die Grundfläche 40 ist in der abgebildeten Ausgestaltung planar ausgebildet.

Zudem weist das Messrohr 1 zwei in Längsrichtung des Messrohres 1 versetzte Aufnahmen 52.1, 52.2 auf, welche dazu eingerichtet sind einen Fixierkörper einer in der Aufnahmeeinheit angeordneten Fixiervorrichtung auszunehmen. Ausgehend von den Aufnahmen 52.1, 52.2 erstreckt sich in Montagerichtung jeweils eine Andrückfläche 55. Die Andrückfläche 55 weist einen Lotvektor auf, welcher aus der Summe zweier Basisvektoren gebildet ist, nämlich einem ersten Basisvektor, welcher in Montagerichtung (siehe Pfeil) zeigt und einem zweiten Basisvektor welcher senkrecht zum ersten Basisvektor und parallel zur zweiten Längsachse 6.2 orientiert ist. Die Andrückfläche 55 dient dazu eine geradlinige Montagebewegung des Messrohres 1 in Montagerichtung in eine geradlinige Bewegung des Fixierkörpers in Richtung des Gehäuseinneren umzuwandeln. Durch die Andrückfläche 55 wird der Fixierkörper gleichmäßig in das Gehäuseinnere verdrängt. Nach dem Überwinden der Andrückfläche bewirkt die Feder der Fixiervorrichtung, dass der Fixierkörper in Richtung der Aufnahme 52 bewegt wird. Die Aufnahme 52 ist komplementär zu einem Teilabschnitt des Fixierkörpers ausgebildet. In der abgebildeten Ausgestaltung ist zwischen Aufnahme 52 und Andrückfläche 55 eine Führungsfläche 32 vorgesehen, welche zur Andrückfläche 55 geneigt ausgebildet ist und derart geformt ist, dass bei einer Zugkraft am Messrohr entgegengesetzt zur Montagerichtung der Fixierkörper aus der Aufnahme 52 geführt und somit die form- und/oder kraftschlüssige Verbindung zwischen Messrohr 1 und Aufnahmeeinheit gelöst wird. Nach der Ausgestaltung ist eine zusätzliche Entriegelvorrichtung nicht notwendig. Eine Längsebene des Messrohrkörpers, welche senkrecht zur Elektrodenachse 21 orientiert ist teilt die Aufnahmen 52.1, 52.2 jeweils in zwei Seiten ein. Dabei ist die Längsebene keine Spiegelebene, da ausschließlich eine der beiden Seiten eine Führungsfläche 32 aufweist. Die entgegengesetzte Seite weist eine Stoppfläche auf, deren Lotvektor im Wesentlichen ausschließlich in Montagerichtung zeigt.

Der Messrohrkörper 2 ist einstückig ausgebildet und mittels eines Spritzgussverfahrens hergestellt.

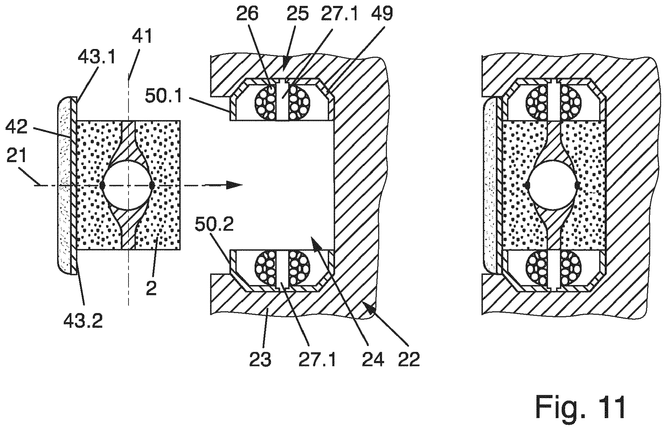

Die Fig. 11 zeigt einen Querschnitt durch eine weitere Ausgestaltung des Messrohres 1 und der Aufnahmeeinheit 22 im Montagezustand (links) und im Einbauzustand (rechts). Aus Übersichtsgründen wurden die Anschlusskontakte nicht abgebildet. Im Gehäuse 23 der Aufnahmeeinheit 22 ist eine magnetfelderzeugende Vorrichtung 25 angeordnet, welche zwei diametral an der Messrohraufnahme 24 angeordnete Spulen 26 mit jeweils einem Spulenkern 27.1, 27.2 umfasst. Die der Messrohraufnahme 24 abgewandten Enden der Spulenkerne 27.1, 27.2 werden über genau einen Feldführungskörper 49 miteinander verbunden. Zudem weist die magnetfelderzeugende Vorrichtung 25 zwei Kontaktflächen 50.1, 50.2 auf, welche sich aus der Stirnseite des Gehäuses 23 erstrecken und durch feldführende Komponenten des Messrohres 1 kontaktiert werden können.

Das Messrohr 1 weist zwei diametral angeordnete Messelektrode auf, welche durch eine Elektrodenachse 21 geschnitten werden. Zudem sind im Messrohrkörper 2 zwei diametral angeordnete Polschuhe integriert. Senkrecht zur Elektrodenachse 21 verläuft eine Längsebene 41, wobei die Längsachse des Messrohres in der Längsebene 41 liegt. Die Längsebene 41 teilt das Messrohr 1 in zwei Teile I, II ein. Ein Teil I des Messrohres 1 weist einen Feldführungskörper 42 auf, welcher zumindest teilweise in dem Messrohrkörper 2 integriert ist und eine erste Kontaktfläche 43.1 und eine zweite Kontaktfläche 43.2 aufweist, welche jeweils freiliegend ausgebildet sind und dazu dienen beim Einführen des Messrohres 1 in die Messrohraufnahme 24 einen Kontakt mit den Kontaktflächen 50.1, 50.2 der magnetfelderzeugende Vorrichtung 25 zu bilden. Der Feldführungskörper 42 kann im Spitzgussverfahren mit umspritzt werden, wodurch der Feldführungskörper 42 formschlüssig mit dem Messrohrkörper 2 verbunden wird.

Im Einbauzustand berührt der Feldführungskörper 42 die Kontaktflächen 50.1, 50.2 der magnetfelderzeugende Vorrichtung 25 und das erzeugte Magnetfeld wird um den Messabschnitt des Messrohres durch die beiden Feldführungskörper 42, 49 von einem Spulenkern 27.1 bis zum gegenüberliegenden Spulenkern 27.2 geleitet.

### Bezugszeichenliste

- 1: Messrohr
- 2: Messrohrkörper
- 3: Messelektrode
- 3.1: erste Messelektrode
- 3.2: zweite Messelektrode
- 4: Aufnahme
- 5.1: erste Bereich
- 5.2: zweite Bereich
- 6.1: erste Längsachse
- 6.2: zweite Längsachse
- 7: Längsachse des Messrohrkörpers
- 8: Längsebene
- 9: Messelektrodenkörper
- 10: Messelektrodenteil
- 10.1: erstes Messelektrodenteil
- 10.2: zweites Messelektrodenteil
- 11: Frontbereich des ersten Messelektrodenteils
- 12: Endbereich des ersten Messelektrodenteils
- 13: Aufnahme im Endbereich des ersten Messelektrodenteils
- 14: Frontbereich des zweiten Messelektrodenteils
- 15: Endbereich des zweiten Messelektrodenteils
- 16: Aufnahme im Endbereich des zweiten Messelektrodenteils
- 17: Temperatursensor
- 18.1: erste Querschnittsebene
- 18.2: zweite Querschnittsebene
- 19: Steckverbinder
- 20: Bezugsachse des Temperatursensors
- 21: Elektrodenachse
- 22: Aufnahmeeinheit
- 23: Gehäuse
- 24: Messrohraufnahme
- 25: magnetfelderzeugende Vorrichtung
- 26: Spule
- 27: Spulenkern
- 28: Anschlusskontakte
- 28.1: erste Anschlusskontakt
- 28.2: zweite Anschlusskontakt
- 28.3: dritte Anschlusskontakt
- 29: Kontaktbereich
- 30: Messschaltung
- 31: Basisfläche
- 32: Führungsfläche
- 33: Referenzelektrode
- 34: Aufnahme
- 35: Polschuh
- 36: erste Stirnfläche
- 37: zweite Stirnfläche
- 38: erste Seitenfläche
- 39: zweite Seitenfläche
- 40: Grundfläche
- 41: Längsebene
- 42: Feldführungskörper
- 43: Kontaktfläche
- 44: Betriebsschaltung
- 45: Öffnung
- 46: Schenkelfläche
- 48: Spulenkernabschnitt
- 49: Feldführungskörper
- 50: Kontaktflächen
- 52: Aufnahme
- 53: Fixierkörper
- 54: Fixiervorrichtung
- 55: Andrückfläche des Messrohres
- 56: Öffnung
- 57: Innenfläche
- 59: Andrückfläche des Fixierkörpers
- 60: Prozessanschluss

## Patentansprüche

1. Magnetisch-induktives Durchflussmessgerät, umfassend:
- ein auswechselbares Messrohr (1) zum Führen eines fließfähigen Mediums in Fließrichtung, umfassend:
-- einen Messrohrkörper (2),
wobei der Messrohrkörper (2) eine integral ausgebildete Aufnahme (34) aufweist,
wobei der Messrohrkörper (2) eine Montagefläche aufweist, zum mechanisch lösbaren Einbau des Messrohres (1) in eine Aufnahmeeinheit (22) in einer durch die Montagefläche definierten Position;
-- mindestens zwei Messelektroden (3) zum Bilden eines galvanischen Kontaktes mit dem Medium,
wobei eine Längsebene (41), in welcher eine Längsachse (7) des Messrohres (1) verläuft und welche senkrecht zu einer zwei Messelektroden (3.1, 3.2) verbindenden Elektrodenachse (21) verläuft den Messrohrkörper (2) in zwei Seiten (I, II) einteilt; und
-- mindestens einen Polschuh (35), der aus einem einzelnen Blechteil oder aus einer Vielzahl an gestapelten und miteinander verbundenen Blechteilen gebildet ist,
wobei der Polschuh (35) in der Aufnahme (34) angeordnet ist;
- die Aufnahmeeinheit (22) zum Aufnehmen des auswechselbaren Messrohres (1), umfassend:
-- ein Gehäuse (23),
wobei das Gehäuse (23) eine Messrohraufnahme (24) aufweist;
-- eine magnetfelderzeugende Vorrichtung (25) zum Erzeugen eines durch die Messrohraufnahme (24) reichenden Magnetfeldes,
wobei die magnetfelderzeugende Vorrichtung (25) zwei Spulen (26.1, 26.2) mit jeweils einem sich durch das Innere einer Spule (26.1, 26.2) erstreckenden Spulenkern (27.1, 27.2) aufweist,
wobei die magnetfelderzeugende Vorrichtung (25) im Gehäuse (23) angeordnet ist;
-- Messschaltung (30) zum Bestimmen einer an Messelektroden (3) des Messrohres (1) anliegenden Messspannung;
-- Betriebsschaltung (44) zum Betreiben der magnetfelderzeugenden Vorrichtung;
-- mindestens zwei Anschlusskontakte (28), die dazu ausgebildet sind die Messelektroden (3) des Messrohres (1) mit der Messschaltung (30) elektrisch und mechanisch lösbar zu verbinden,
wobei Kontaktbereiche (29) der jeweiligen Anschlusskontakte (28) aus dem Gehäuse (23) hervorstehen und in die Messrohraufnahme (24) reichen,
wobei das Messrohr (1) mechanisch lösbar mit der Aufnahmeeinheit (22) verbunden ist,
**dadurch gekennzeichnet, dass** das Messrohr (1) genau einen Feldführungskörper (42) zum Führen eines magnetischen Feldes umfasst, welcher an einer der zwei Seiten (I, II) des Messrohrkörpers (2) angeordnet ist,
wobei der Feldführungskörper (42) formschlüssig mit dem Messrohrkörper (2) verbunden ist,
wobei der Feldführungskörper (42) zwei offene Kontaktflächen (43.1, 43.2) aufweist,
wobei die magnetfelderzeugende Vorrichtung (25) zwei Kontaktflächen (50.1, 50.2) aufweist, welche jeweils als eine Kontaktfläche (50.1, 50.2) für den am Messrohr (1) angeordneten Feldführungskörper (42) dienen,
wobei die Kontaktflächen (50.1, 50.2) an einer Stirnseite des Gehäuses (23) angeordnet sind,
wobei der Feldführungskörper (42) dazu eingerichtet ist, nach dem Anordnen des Messrohres (1) in die Aufnahmeeinheit (22) die zwei Spulenkerne (27.1, 27.2) der magnetfelderzeugenden Vorrichtung (25) miteinander zu verbinden.

2. Magnetisch-induktives Durchflussmessgerät nach Anspruch 1,
wobei sich ein am Messrohr (1) angeordneter Polschuh (35) und ein sich durch eine Öffnung (45) in der Messrohraufnahme (24) erstreckender Spulenkern (27) berühren.

3. Magnetisch-induktives Durchflussmessgerät nach einem der vorhergehenden Ansprüche,
wobei der Polschuh (35) eine erste Stirnfläche (36) und eine zweite Stirnfläche (37) aufweist, die den Polschuh (35) in Längsrichtung abgrenzen,
wobei sich der Messrohrkörper (2) entlang der ersten Stirnfläche (36) und der zweiten Stirnfläche (37) erstreckt und diese jeweils in Längsrichtung insbesondere vollständig bedeckt.

4. Magnetisch-induktives Durchflussmessgerät nach einem der vorhergehenden Ansprüche,
wobei der Polschuh (35) eine erste Seitenflächen (38) und eine zweite Seitenflächen (39) aufweist,
wobei die erste Seitenfläche (38) die erste Stirnfläche (36) mit der zweiten Stirnfläche (37) verbindet,
wobei die zweite Seitenfläche (39) die erste Stirnfläche (36) mit der zweiten Stirnfläche (37) verbindet,
wobei sich der Messrohrkörper (2) entlang der ersten Seitenfläche (39) und der zweiten Seitenfläche (39) erstreckt und diese insbesondere vollständig bedeckt.

5. Magnetisch-induktives Durchflussmessgerät nach einem der vorhergehenden Ansprüche,
wobei eine Grundfläche (40) des Polschuhs (35) nicht oder nur teilweise durch den Messrohrkörper (2) bedeckt ist,
wobei die Grundfläche (40) die erste Stirnfläche (36) und die zweite Stirnfläche (37) verbindet,
wobei die Grundfläche (40) die erste Seitenfläche (38) mit der zweiten Seitenfläche (39) verbindet.

6. Magnetisch-induktives Durchflussmessgerät nach einem der vorhergehenden Ansprüche,
wobei der Messrohrkörper (2) monolithisch ausgebildet ist,
wobei der Messrohrkörper (2) mittels eines Urformverfahrens, insbesondere mittels eines Spritzgussverfahrens gebildet ist,
wobei der Polschuh (35) mittels des Urformverfahrens, insbesondere mittels des Spritzgussverfahrens teilweise durch ein den Messrohrkörper (2) bildenden Vergussmaterial umspritzt ist.

7. Magnetisch-induktives Durchflussmessgerät nach einem der vorhergehenden Ansprüche,
wobei sich der Spulenkern (27) durch eine Öffnung (45) in der Messrohraufnahme (24) erstreckt,
wobei der Spulenkern (27) derart ausgebildet und in der Messrohranordnung (24) angeordnet ist, dass bei einem Anordnen des Messrohres (1) in die Messrohraufnahme (24) ein Kontakt zwischen Spulenkern (27) und Polschuh (35) entsteht.

8. Magnetisch-induktives Durchflussmessgerät nach einem der vorhergehenden Ansprüche,
wobei die Messrohranordnung (24) durch zwei Schenkelflächen (46.1, 46.2) in eine Richtung senkrecht zu einer Montagerichtung des Messrohres (1) und senkrecht zur Längsrichtung des Messrohrkörpers (1) begrenzt ist,
wobei die Messrohranordnung (24) durch eine Basisfläche in Montagerichtung des Messrohres (1) begrenzt ist.

9. Magnetisch-induktives Durchflussmessgerät nach einem der vorhergehenden Ansprüche,
wobei die Spule (26) in Montagerichtung hinter der Basisfläche im Gehäuse (23) angeordnet ist,
wobei der Spulenkern (27) einen ersten Spulenkernabschnitt (48.1) aufweist, welcher sich durch die Spule (26) erstreckt,
wobei der Spulenkern (27) einen zweiten Spulenkernabschnitt (48.2) aufweist, welcher sich ausgehend von dem ersten Spulenkernabschnitt (48.1) in Richtung einer der zwei Schenkelflächen (46.1, 46.2) erstreckt.

10. Magnetisch-induktives Durchflussmessgerät nach einem der vorhergehenden Ansprüche,
wobei der Messrohrkörper (2) elektrisch isolierend ausgebildet ist.

11. Magnetisch-induktives Durchflussmessgerät nach einem der vorhergehenden Ansprüche,
wobei das Messrohr (1) kraft- und/oder formschlüssig mit der Aufnahmeeinheit (22) verbunden ist.

## Claims

1. Magnetic flow meter comprising:
- an exchangeable measuring tube (1) for guiding a flowable medium in the flow direction, comprising:
-- a measuring tube body (2),
wherein the measuring tube body (2) has an integrally formed receptacle (34),
wherein the measuring tube body (2) has a mounting surface for mechanically detachable installation of the measuring tube (1) in a receiving unit (22) in a position defined by the mounting surface;
-- at least two measuring electrodes (3) for forming a galvanic contact with the medium,
wherein a longitudinal plane (41), in which a longitudinal axis (7) of the measuring tube (1) runs and which runs perpendicular to an electrode axis (21) connecting two measuring electrodes (3.1, 3.2), divides the measuring tube body (2) into two sides (I, II); and
-- at least one pole piece (35), which is formed from a single sheet metal part or from a plurality of stacked and interconnected sheet metal parts,
wherein the pole shoe (35) is arranged in the receptacle (34);
- the receiving unit (22) for receiving the exchangeable measuring tube (1), comprising
-- a case (23),
the case (23) having a measuring tube holder (24)
-- a magnetic field generating device (25) for generating a magnetic field extending through the measuring tube receptacle (24),
wherein the magnetic field generating device (25) comprises two coils (26.1, 26.2) each having a coil core (27.1, 27.2) extending through the interior of a coil (26.1, 26.2),
wherein the magnetic field generating device (25) is arranged in the case (23);
-- measuring circuit (30) for determining a measuring voltage applied to measuring electrodes (3) of the measuring tube (1);
-- operating circuit (44) for operating the magnetic field generating device;
-- at least two connecting contacts (28) which are designed to connect the measuring electrodes (3) of the measuring tube (1) to the measuring circuit (30) in an electrically and mechanically detachable manner,
wherein contact regions (29) of the respective connection contacts (28) protrude from the case (23) and extend into the measuring tube holder (24),
wherein the measuring tube (1) is mechanically detachably connected to the receiving unit (22),
**characterized in that** the measuring tube (1) comprises exactly one field guide body (42) for guiding a magnetic field, which is arranged on one of the two sides (I, II) of the measuring tube body (2),
wherein the field guiding body (42) is positively connected to the measuring tube body (2),
wherein the field guide body (42) has two open contact surfaces (43.1, 43.2),
wherein the magnetic field generating device (25) has two contact surfaces (50.1, 50.2), each of which serves as a contact surface (50.1, 50.2) for the field guide body (42) arranged on the measuring tube (1),
wherein the contact surfaces (50.1, 50.2) are arranged on an end face of the case (23),
wherein the field guide body (42) is designed to connect the two coil cores (27.1, 27.2) of the magnetic field generating device (25) to one another after the measuring tube (1) has been arranged in the receiving unit (22).

2. Magnetic flow meter according to claim 1,
wherein a pole piece (35) arranged on the measuring tube (1) and a coil core (27) extending through an opening (45) in the measuring tube holder (24) are in contact.

3. Magnetic flow meter according to any one of the preceding claims,
wherein the pole piece (35) has a first end face (36) and a second end face (37), which delimit the pole piece (35) in the longitudinal direction,
wherein the measuring tube body (2) extends along the first end face (36) and the second end face (37) and in particular covers them completely in the longitudinal direction.

4. Magnetic flow meter according to any one of the preceding claims,
wherein the pole piece (35) has a first side face (38) and a second side face (39),
wherein the first side surface (38) connects the first end surface (36) to the second end surface (37),
wherein the second side face (39) connects the first end face (36) to the second end face (37),
wherein the measuring tube body (2) extends along the first side surface (39) and the second side surface (39) and in particular covers them completely.

5. Magnetic flow meter according to any one of the preceding claims,
wherein a base surface (40) of the pole piece (35) is not or only partially covered by the measuring tube body (2),
wherein the base surface (40) connects the first end surface (36) and the second end surface (37),
wherein the base surface (40) connects the first side surface (38) with the second side surface (39).

6. Magnetic flow meter according to any one of the preceding claims,
wherein the measuring tube body (2) is monolithic,
wherein the measuring tube body (2) is formed by means of a primary molding process, in particular by means of an injection molding process,
wherein the pole piece (35) is partially encapsulated by a potting material forming the measuring tube body (2) by means of the primary molding process, in particular by means of the injection molding process.

7. magnetic flow meter according to one of the preceding claims,
wherein the coil core (27) extends through an opening (45) in the measuring tube body (24),
wherein the coil core (27) is designed and arranged in the measuring tube arrangement (24) in such a way that when the measuring tube (1) is arranged in the measuring tube holder (24), contact is made between the coil core (27) and the pole piece (35).

8. Magnetic flow meter according to any one of the preceding claims,
wherein the measuring tube arrangement (24) is bounded by two leg surfaces (46.1, 46.2) in a direction perpendicular to a mounting direction of the measuring tube (1) and perpendicular to the longitudinal direction of the measuring tube body (1),
wherein the measuring tube arrangement (24) is limited by a base surface in the mounting direction of the measuring tube (1).

9. Magnetic flow meter according to any one of the preceding claims,
wherein the coil (26) is arranged behind the base surface in the case (23) in the mounting direction,
(26), wherein the coil core (27) comprises a first coil core portion (48.1) extending through the coil
the coil core (27) having a second coil core section (48.2) which extends from the first coil core section (48.1) in the direction of one of the two leg surfaces (46.1, 46.2).

10. magnetic flow meter according to any one of the preceding claims,
wherein the measuring tube body (2) is electrically insulating.

11. Magnetic flow meter according to one of the preceding claims,
wherein the measuring tube (1) is non-positively and/or positively connected to the receiving unit (22).

## Revendications

1. Débitmètre magnétique comprenant
- un tube de mesure interchangeable (1) pour guider un fluide dans le sens de l'écoulement, comprenant :
-- un corps de tube de mesure (2),
dans lequel le corps du tube de mesure (2) a un réceptacle intégré (34),
dans lequel le corps du tube de mesure (2) a une surface de montage pour l'installation mécaniquement détachable du tube de mesure (1) dans une unité de réception (22) dans une position définie par la surface de montage ;
-- au moins deux électrodes de mesure (3) pour former un contact galvanique avec le milieu,
dans lequel un plan longitudinal (41), dans lequel passe un axe longitudinal (7) du tube de mesure (1) et qui est perpendiculaire à un axe d'électrode (21) reliant deux électrodes de mesure (3.1, 3.2), divise le corps du tube de mesure (2) en deux côtés (I, II) ; et
-- au moins une pièce polaire (35), formée d'une seule pièce de tôle ou d'une pluralité de pièces de tôle empilées et interconnectées,
dans lequel la pièce polaire (35) est disposée dans le réceptacle (34) ;
- l'unité de réception (22) destinée à recevoir le tube de mesure interchangeable (1), comprenant
-- un boîtier (23),
un boîtier (23), le boîtier (23) comportant un support de tube de mesure (24)
-- un dispositif de génération de champ magnétique (25) pour générer un champ magnétique s'étendant à travers le réceptacle du tube de mesure (24),
dans lequel le dispositif de génération de champ magnétique (25) comprend deux bobines (26.1, 26.2) ayant chacune un noyau de bobine (27.1, 27.2) s'étendant à l'intérieur d'une bobine (26.1, 26.2),
dans lequel le dispositif de génération de champ magnétique (25) est disposé dans le boîtier (23) ;
-- circuit de mesure (30) pour déterminer une tension de mesure appliquée aux électrodes de mesure (3) du tube de mesure (1) ;
-- un circuit de commande (44) pour faire fonctionner le dispositif de génération de champ magnétique ;
-- au moins deux contacts de connexion (28) conçus pour connecter les électrodes de mesure (3) du tube de mesure (1) au circuit de mesure (30) d'une manière électriquement et mécaniquement détachable,
dans lequel les zones de contact (29) des contacts de connexion respectifs (28) font saillie du boîtier (23) et s'étendent dans le support du tube de mesure (24),
le tube de mesure (1) est relié mécaniquement à l'unité de réception (22),
**caractérisé par le fait que** le tube de mesure (1) comprend exactement un corps de guidage de champ (42) pour guider un champ magnétique, qui est disposé sur l'un des deux côtés (I, II) du corps du tube de mesure (2),
dans lequel le corps de guidage de champ (42) est relié positivement au corps du tube de mesure (2),
dans lequel le corps de guidage de champ (42) a deux surfaces de contact ouvertes (43.1, 43.2),
dans lequel le dispositif de génération de champ magnétique (25) possède deux surfaces de contact (50.1, 50.2), chacune servant de surface de contact (50.1, 50.2) pour le corps de guidage de champ (42) disposé sur le tube de mesure (1),
dans lequel les surfaces de contact (50.1, 50.2) sont disposées sur une face d'extrémité du boîtier (23),
dans lequel le corps de guidage de champ (42) est conçu pour connecter l'un à l'autre les deux noyaux de bobine (27.1, 27.2) du dispositif de génération de champ magnétique (25) après que le tube de mesure (1) a été placé dans l'unité de réception (22).

2. Débitmètre magnétique selon la revendication 1,
dans lequel une pièce polaire (35) disposée sur le tube de mesure (1) et un noyau de bobine (27) s'étendant à travers une ouverture (45) dans le support du tube de mesure (24) sont en contact.

3. Débitmètre magnétique selon l'une quelconque des revendications précédentes,
dans lequel la pièce polaire (35) présente une première face d'extrémité (36) et une seconde face d'extrémité (37), qui délimitent la pièce polaire (35) dans la direction longitudinale,
dans lequel le corps du tube de mesure (2) s'étend le long de la première face d'extrémité (36) et de la deuxième face d'extrémité (37) et, en particulier, les recouvre complètement dans la direction longitudinale.

4. Débitmètre magnétique selon l'une quelconque des revendications précédentes,
dans lequel la pièce polaire (35) présente une première face latérale (38) et une seconde face latérale (39),
dans laquelle la première face latérale (38) relie la première surface d'extrémité (36) à la deuxième surface d'extrémité (37),
la seconde face latérale (39) relie la première face d'extrémité (36) à la seconde face d'extrémité (37),
le corps du tube de mesure (2) s'étend le long de la première surface latérale (39) et de la deuxième surface latérale (39) et, en particulier, les recouvre entièrement.

5. Débitmètre magnétique selon l'une quelconque des revendications précédentes,
dans lequel une surface de base (40) de la pièce polaire (35) n'est pas ou seulement partiellement recouverte par le corps du tube de mesure (2),
dans lequel la surface de base (40) relie la première surface d'extrémité (36) et la deuxième surface d'extrémité (37),
dans lequel la surface de base (40) relie la première surface latérale (38) à la deuxième surface latérale (39).

6. Débitmètre magnétique selon l'une quelconque des revendications précédentes,
dans lequel le corps du tube de mesure (2) est monolithique,
dans lequel le corps du tube de mesure (2) est formé au moyen d'un procédé de moulage primaire, en particulier au moyen d'un procédé de moulage par injection,
dans lequel la pièce polaire (35) est partiellement encapsulée dans un matériau d'enrobage formant le corps du tube de mesure (2) au moyen du processus de moulage primaire, en particulier au moyen du processus de moulage par injection.

7. Débitmètre magnétique selon l'une des revendications précédentes,
dans lequel le noyau de la bobine (27) s'étend à travers une ouverture (45) dans le corps du tube de mesure (24),
dans lequel le noyau de la bobine (27) est conçu et disposé dans l'arrangement du tube de mesure (24) de telle sorte que lorsque le tube de mesure (1) est disposé dans le support du tube de mesure (24), un contact est établi entre le noyau de la bobine (27) et la pièce polaire (35).

8. Débitmètre magnétique selon l'une quelconque des revendications précédentes,
dans lequel l'arrangement du tube de mesure (24) est délimité par deux surfaces de jambe (46.1, 46.2) dans une direction perpendiculaire à une direction de montage du tube de mesure (1) et perpendiculaire à la direction longitudinale du corps du tube de mesure (1),
dans lequel l'agencement du tube de mesure (24) est limité par une surface de base dans la direction de montage du tube de mesure (1).

9. Débitmètre magnétique selon l'une quelconque des revendications précédentes,
dans lequel la bobine (26) est disposée derrière la surface de base dans le boîtier (23) dans la direction de montage,
dans lequel le noyau de la bobine (27) comprend une première partie du noyau de la bobine (48.1) s'étendant à travers la bobine (26),
le noyau de la bobine (27) comporte une deuxième section du noyau de la bobine (48.2) qui s'étend à partir de la première section du noyau de la bobine (48.1) en direction de l'une des deux surfaces des jambes (46.1, 46.2).

10. Débitmètre magnétique selon l'une quelconque des revendications précédentes,
dans lequel le corps du tube de mesure (2) est électriquement isolant.

11. Débitmètre magnétique selon l'une des revendications précédentes,
dans lequel le tube de mesure (1) est relié positivement et/ou non positivement à l'unité de réception (22).
